# EUROPÄISCHE PATENTSCHRIFT

(11) **EP 4 108 390 B1**
(45) Veröffentlichungstag und Bekanntmachung des Hinweises auf die Patenterteilung: **02.08.2023**
(21) Anmeldenummer: 21181648.3
(22) Anmeldetag: 25.06.2021
(51) Int. Cl.: B25J 9/16

(54) **VERFAHREN ZUM SICHEREN BETRIEB EINES BEWEGLICHEN MASCHINENTEILS**
METHOD FOR SECURE OPERATION OF A MOVABLE MACHINE PART
PROCÉDÉ DE FONCTIONNEMENT SÉCURISÉ D'UNE PIÈCE DE MACHINE MOBILE

(43) Veröffentlichungstag der Anmeldung: 28.12.2022
(73) Patentinhaber: SICK AG, 79183 Waldkirch (DE)
(72) Erfinder: Hansen, Christoph, 20535 Hamburg (DE); Schubert, Lars, 24119 Kronshagen (DE); Plitzkow, Jan, 22926 Ahrensburg (DE); Winter, Jonas, 23896 Nusse (DE)
(74) Vertreter: Manitz Finsterwald Patent- und Rechtsanwaltspartnerschaft mbB

(56) Entgegenhaltungen:
- WO-A1-2018/005986
- DE-A1-102016 212 694
- DE-A1-102018 118 265
- US-A1- 2017 144 307
- US-B1- 9 211 643
- TIAN YAFU ET AL: "A fast incremental map segmentation algorithm based on spectral clustering and quadtree", ADVANCES IN MECHANICAL ENGINEERING, [Online] Bd. 10, Nr. 2, 1. Februar 2018 (2018-02-01), XP055864982, ISSN: 1687-8140, DOI: 10.1177/1687814018761296 Gefunden im Internet: URL:https://journals.sagepub.com/doi/pdf/1 0.1177/1687814018761296> [gefunden am 2021-11-23]

## Beschreibung

Die vorliegende Erfindung betrifft ein Verfahren zum sicheren Betrieb eines beweglichen Maschinenteils, insbesondere eines Roboterarms, bevorzugt im Rahmen einer Mensch-Roboter-Kollaboration.

Die DE 10 2018 118 265 A1 betrifft einen beweglichen Roboterarm mit einem an dem Arm befestigten Sensor. In einer Einlernphase wird mit dem Sensor eine Referenzkarte erstellt, wobei in einer Betriebsphase Abweichungen gegenüber der Einlernphase einer Sicherheitsbewertung unterworfen werden. Für die Ermittlung der Abweichungen wird aus der einzigen Referenzkarte eine Sollansicht der Umgebung erzeugt und mit der Erfassung des Sensors verglichen.

In WO 2018/005986 A1 wird ein autonom navigierender Roboter beschrieben, welcher über einen Sensor Objekte in der Umgebung, beispielsweise Personen, erfassen kann. Dabei wird eine Karte der Umgebung aus den Sensordaten erstellt, wobei Bewegungen die sehr nahe an stationären Objekten stattfinden ignoriert werden.

Im industriellen Umfeld können verschiedene Arbeiten von beweglichen Maschinen bzw. Maschinenteilen ausgeführt werden. Hierbei werden häufig Arbeiten im Zusammenspiel zwischen einem Roboter und einem Menschen durchgeführt. Eine solche Mensch-Roboter-Kollaboration findet dabei oft auf engem Raum statt, so dass ein Schutz des Menschen vor dem Roboter nicht durch mechanische Schutzeinrichtungen, wie Zäune oder Absperrungen, möglich ist.

Eine besondere Gefahr geht dabei von Werkzeugen des Roboters aus, beispielsweise von einem Bohrer, Schrauber, Fräser oder scharfkantigen Greifern.

Um einen Schutz des Menschen zu gewährleisten und zugleich einen effektiven Betrieb des Roboters zu ermöglichen, muss die Erkennung einer möglichen Gefährdung des Menschen sowohl robust gegen Störeinflüsse sein als auch schnell erfolgen.

Es ist daher die der Erfindung zugrundeliegende Aufgabe, ein Verfahren anzugeben, welches eine zuverlässige und schnelle Erkennung von Gefahrensituationen ermöglicht.

Diese Aufgabe wird durch ein Verfahren gemäß Anspruch 1 gelöst.

Anspruch 1 betrifft ein Verfahren zum sicheren Betrieb eines beweglichen Maschinenteils, insbesondere eines Roboterarms, bevorzugt im Rahmen einer Mensch-Roboter-Kollaboration, wobei
- eine Referenzkarte mit einem oder mehreren Kartenabschnitten bereitgestellt wird, wobei sich die Referenzkarte auf ein ortsfestes Koordinatensystem bezieht und in zumindest einem Kartenabschnitt Positionsinformationen der Umgebung des beweglichen Maschinenteils gespeichert sind,
- mit einem am beweglichen Maschinenteil angebrachten Distanzsensor zumindest eine Distanzmessung für einen Messpunkt eines Umgebungsobjekts durchgeführt wird, wobei die Distanzmessung eine Distanz des beweglichen Maschinenteils zu dem Messpunkt ermittelt,
- anhand einer Position des beweglichen Maschinenteils die Position des Messpunkts in dem ortsfesten Koordinatensystem ermittelt wird,
- basierend auf der Position des Messpunkts der zum Messpunkt zugehörige Kartenabschnitt bestimmt wird, bevorzugt sofern mehrere Kartenabschnitte vorhanden sind,
- ein Vergleich der Position des Messpunkts mit den Positionsinformationen vorgenommen wird, um zu ermitteln, ob das Umgebungsobjekt außerhalb eines Toleranzbereichs zu den Positionsinformationen der Umgebung liegt,
- das bewegliche Maschinenteil in einen sicheren Zustand gebracht wird, wenn das Umgebungsobjekt außerhalb des Toleranzbereichs liegt.

Kurz gesagt, werden gemäß dem Verfahren Positionsinformationen, die die Umgebung des beweglichen Maschinenteils repräsentieren, in einem oder mehreren Kartenabschnitten der Referenzkarte gespeichert. Beim Betrieb des beweglichen Maschinenteils werden dann wiederholt Distanzmessungen mit dem Distanzsensor durchgeführt, wobei die Distanzmessungen jeweils eine Distanz des beweglichen Maschinenteils zu einem jeweiligen Messpunkt ermitteln. Die Position des Messpunkts wird dann in eine Position in dem ortsfesten Koordinatensystem transformiert, so dass auf einfache Weise (und damit mit geringem Zeitaufwand) lediglich die Positionsinformationen in dem jeweiligen zur Position gehörenden Kartenabschnitt ausgewertet werden müssen, um zu erkennen, ob das Umgebungsobjekt innerhalb oder außerhalb des Toleranzbereichs liegt. Liegt das Umgebungsobjekt außerhalb des Toleranzbereichs, liegt eine Gefahrensituation vor, woraufhin das bewegliche Maschinenteil in einen sicheren Zustand gebracht wird, also beispielsweise verlangsamt, gestoppt oder in eine vordefinierte Position gefahren wird.

Das Verfahren geht davon aus, dass zunächst eine Referenzkarte mit einem oder mehreren Kartenabschnitten bereitgestellt wird. Die Referenzkarte kann beispielsweise in einer Steuereinrichtung gespeichert sein. Die Referenzkarte bezieht sich auf ein ortsfestes Koordinatensystem. Beispielsweise kann der Ursprung des ortsfesten Koordinatensystems eine Befestigung des beweglichen Maschinenteils sein. Das bewegliche Maschinenteil bewegt sich also in dem ortsfesten Koordinatensystem.

In zumindest einem oder mehreren der Kartenabschnitte der Referenzkarte sind Positionsinformationen der Umgebung des beweglichen Maschinenteils gespeichert. Ein Teil der Kartenabschnitte kann auch leer sein, d.h. keine Positionsinformationen speichern. Bei der Umgebung des beweglichen Maschinenteils handelt es sich insbesondere um die Umgebung, die um das bewegliche Maschinenteil herum existiert, wenn kein Mensch in der Nähe ist oder dem beweglichen Maschinenteil gefährlich nahekommt. Die Positionsinformationen können daher Informationen z.B. über die unveränderliche Umgebung des beweglichen Maschinenteils (Wände, Boden, andere Maschinenteile und dergleichen) umfassen. Die Positionsinformationen in der Referenzkarte können zudem auch angeben, wo sich beispielsweise ein Werkstück oder ein anderer von dem beweglichen Maschinenteil bearbeiteter Gegenstand befinden kann.

Nachfolgend wird zum Teil auch auf Ausführungsformen Bezug genommen, die mehrere Kartenabschnitte benötigen. Es ist zu verstehen, dass für diese Ausführungsformen eine Referenzkarte mit mehreren Karteabschnitten verwendet wird. Sofern nur ein Kartenabschnitt vorhanden ist, kann das Bestimmen des zugehörigen Kartenabschnitts entfallen, insbesondere wenn die Referenzkarte so gewählt ist oder so groß ist, dass die Position des Messpunkts immer in der Referenzkarte liegt.

Die Positionsinformationen sind bevorzugt in demjenigen Kartenabschnitt gespeichert, der der Position der Positionsinformationen entspricht. Die Positionsinformationen können beispielsweise als Array oder Liste in dem Kartenabschnitt gespeichert sein. Die Positionsinformationen in einem Kartenabschnitt können somit mehrere einzelne Werte umfassen. Die Positionsinformationen repräsentieren die Position von z.B. Gegenständen in der Umgebung des Maschinenteils. Die Kartenabschnitte können also jeweils einen Flächen- und/oder Raumbereich der Umgebung des beweglichen Maschinenteils repräsentieren. Es können auch leere Kartenabschnitte existieren, wobei für leere Kartenabschnitte keine Positionsinformationen vorhanden sind. In einem Bereich der Umgebung, der einem leeren Kartenabschnitt entspricht, befindet sich dementsprechend auch kein Gegenstand der Umgebung.

In einem jeweiligen Kartenabschnitt kann auch jeweils der dort gültige Toleranzbereich (explizit oder implizit) gespeichert sein. Der Toleranzbereich kann sich um die von den Positionsinformationen repräsentierte Position der Umgebung herum erstrecken. Der Toleranzbereich umfasst insbesondere sämtliche Bereiche, in welchen das Vorhandensein z.B. einer Person nicht zum Überführen des beweglichen Maschinenteils in den sicheren Zustand führen soll (d.h. Bereiche in denen das bewegliche Maschinenteil keine Gefahr z.B. für eine Person darstellt). Der Toleranzbereich kann somit z.B. auch sämtliche Bereiche umfassen, die außerhalb eines Gefahrenbereichs liegen aber mittels des Distanzsensors erfasst werden können.

Insbesondere kann auch der Messbereich des Distanzsensors beschränkt oder begrenzt werden. Der Distanzsensor gibt dann z.B. keine Distanzen für Messpunkte aus, die außerhalb eines vorbestimmten Raumbereichs oder außerhalb eines vorbestimmten Entfernungsbereichs zu dem Distanzsensor liegen. Der vorbestimmte Raumbereich kann bevorzugt der Raumbereich sein, der durch die Referenzkarte dargestellt wird. Auf diese Weise müssen nicht per se irrelevante Distanzmessungen ausgewertet werden.

Die Kartenabschnitte können beispielsweise als zweidimensionales oder dreidimensionales Zellenraster ausgebildet sein (d.h. als Pixel oder Voxel), wobei das Zellenraster insbesondere regelmäßig oder auch unregelmäßig sein kann.

An dem beweglichen Maschinenteil ist nun der Distanzsensor angebracht, welcher eine Distanzmessung für einen Messpunkt eines Umgebungsobjekts durchführt. Unter einem Umgebungsobjekt ist dabei ein beliebiges Objekt in der Umgebung des beweglichen Maschinenteils zu verstehen. Das Umgebungsobjekt kann daher Teil der Umgebung sein (die in der Referenzkarte mittels Positionsinformationen gespeichert bzw. repräsentiert ist) oder kann beispielsweise eine Hand oder ein Körperteil eines mit dem beweglichen Maschinenteil kollaborierenden Menschen sein. Durch den Distanzsensor wird nun eine Distanzmessung für einen Messpunkt des Umgebungsobjekts durchgeführt. Der Messpunkt ist insbesondere ein Punkt oder Bereich des Umgebungsobjekts auf den der Distanzsensor ausgerichtet ist und dessen Abstand zu dem Distanzsensor (und damit zu dem beweglichen Maschinenteil) gemessen wird.

Anhand der gemessenen Distanz zwischen dem beweglichen Maschinenteil und dem Messpunkt und anhand der Position oder Pose des beweglichen Maschinenteils, die bekannt ist, kann die Position des Messpunkts in dem ortsfesten Koordinatensystem ermittelt werden. Es wird also eine Transformation vorgenommen, um die Position des Messpunkts in dem ortsfesten Koordinatensystem zu bestimmen.

Das bewegliche Maschinenteil kann von Aktoren angetrieben sein, um Bewegungen zu vollführen und verschiedene Posen einzunehmen.

Basierend auf der Position des Messpunkts im ortsfesten Koordinatensystem kann dann der zum Messpunkt zugehörige Kartenabschnitt bestimmt werden. Der Kartenabschnitt kann zum Beispiel über einen Index bestimmt und/oder ausgewählt werden. Daraufhin können die Positionsinformationen des ausgewählten Kartenabschnitts ausgelesen und mit der Position des Messpunkts verglichen werden. Die Positionsinformationen können dabei einen Toleranzbereich umfassen, welcher beispielsweise ein um die eigentliche Positionsinformation liegender Bereich sein kann. Durch die Verwendung eines Toleranzbereichs um die Positionsinformation, kann der Toleranzbereich jeweils an die Genauigkeit der Messung in einem jeweiligen Bereich der Referenzkarte angepasst werden, wodurch die Robustheit des Verfahrens erhöht wird.

Schließlich wird überprüft, ob das Umgebungsobjekt innerhalb oder außerhalb des Toleranzbereichs liegt. Liegt das Umgebungsobjekt innerhalb des Toleranzbereichs, so wird davon ausgegangen, dass es sich bei dem Umgebungsobjekt um einen Teil der Umgebung des beweglichen Maschinenteils handelt. Alternativ kann es sich z.B. auch um einen Menschen handeln, der aber weit genug vom beweglichen Maschinenteil entfernt ist. In diesem Fall ist keine weitere Aktion notwendig. Liegt das Umgebungsobjekt aber außerhalb des Toleranzbereichs, so kann es sich potentiell um eine Gefahrensituation handeln, woraufhin das bewegliche Maschinenteil in den sicheren Zustand gebracht wird.

Die vorgenannten Schritte können beispielsweise von einer Steuereinrichtung ausgeführt werden, wobei die Steuereinrichtung den Distanzsensor ansteuert und die vom Distanzsensor ermittelten Messwerte für die Distanz auswertet. Bei dem Distanzsensor kann es sich grundsätzlich um jeden Sensor handeln, der eine Tiefeninformation bereitstellt. Der Distanzsensor kann beispielsweise einen oder mehrere Lichtlaufzeit-Sensoren (TOF - Time Of Flight-Sensoren) umfassen. Ein Lichtlaufzeit-Sensor kann insbesondere auch eine Single-Photon Avalanche Diode (SPAD) aufweisen. Alternativ oder zusätzlich ist es auch möglich, dass der Distanzsensor eine Kombination von mehreren 2D-Sensoren aufweist und z.B. eine Stereokamera ist.

Weitere Ausführungsformen der Erfindung sind der Beschreibung, den Unteransprüchen sowie den Zeichnungen zu entnehmen.

Gemäß einer ersten Ausführungsform werden die Positionsinformationen der Umgebung in einem Einlernmodus ermittelt und in der Referenzkarte gespeichert, wobei der Distanzsensor im Einlernmodus die Positionsinformationen der Umgebung erfasst und die Positionsinformationen in dem zugehörigen Kartenabschnitt gespeichert werden. Im Einlernmodus wird davon ausgegangen, dass kein Eingriff durch Störobjekte oder einen Menschen vorliegt. Im Einlernmodus kann das bewegliche Maschinenteil beispielsweise einen üblichen Bewegungsablauf vollführen, wobei bei der Ausführung des Bewegungsablaufs wiederholt mit dem Distanzsensor Messungen durchgeführt werden, um die Distanzen zur Umgebung zu erfassen. Aus den erfassten Distanzen und aus der bekannten Position bzw. Pose des beweglichen Maschinenteils kann dann die Position der Umgebung für die jeweilige Messung in Bezug auf das ortsfeste Koordinatensystem bestimmt werden. Die Position der Umgebung in dem ortsfesten Koordinatensystem wird dann als Positionsinformation in denjenigen Kartenabschnitt gespeichert, der die Position des vom Distanzsensor in der Umgebung erkannten Gegenstands (z.B. Werkstück, Wand, Boden, Sicherheitstür und dergleichen) repräsentiert. Dabei können viele Kartenabschnitte leer bleiben, wenn sich dort kein Gegenstand befindet. Kartenabschnitte können im Einlernmodus insbesondere nur dann gefüllt werden, wenn dort ein Teil der Umgebung detektiert wird. Kurz gesagt, wird im Einlernmodus also die bekannte Umgebung vermessen und in der Referenzkarte gespeichert.

Alternativ oder zusätzlich ist es auch möglich, die Positionsinformationen in der Referenzkarte aus Planungs- und/oder Simulationsdaten zu generieren. Beispielsweise können die Positionsinformationen in der Referenzkarte aus CAD-Daten des beweglichen Maschinenteils und dessen Umgebung erzeugt werden. Auch können die Positionsinformationen in der Referenzkarte aus einer Simulation der Bewegung des beweglichen Maschinenteils in der Umgebung erzeugt werden. Dabei kann der Arbeitsablauf des beweglichen Maschinenteils simuliert werden.

Gemäß einer weiteren Ausführungsform ermittelt der Distanzsensor im Einlernmodus die Positionsinformationen der Umgebung durch Distanzmessung, wobei die Positionsinformationen aus den Distanzmessungen durch Transformation in das ortsfeste Koordinatensystem erzeugt werden. Insbesondere werden die Positionsinformationen im Einlernmodus als Punktwolke in der Referenzkarte gespeichert. Bei der Punktwolke kann es sich beispielsweise um eine zweidimensionale oder dreidimensionale Punktwolke handeln.

Wie oben erläutert, verwendet die Transformation die Kenntnis der Position des beweglichen Maschinenteils und insbesondere der Position und Ausrichtung des Distanzsensors am beweglichen Maschinenteil, um die Transformation in das ortsfeste Koordinatensystem vorzunehmen. Die Position des beweglichen Maschinenteils kann beispielsweise von einer Steuerung des beweglichen Maschinenteils, d.h. beispielsweise aus Ansteuerungsinformationen, abgefragt werden. Die Position kann insbesondere auch durch Encoder z.B. an Servomotoren festgestellt werden. Alternativ oder zusätzlich ist es auch möglich, die Position des beweglichen Maschinenteils in der Referenzkarte virtuell mittels der Simulation der Bewegung des beweglichen Maschinenteils in der Umgebung zu ermitteln. Dabei kann der Arbeitsablauf des beweglichen Maschinenteils simuliert werden.

Gemäß einer weiteren Ausführungsform erfolgt eine Bearbeitung der in der Referenzkarte gespeicherten Positionsinformationen, wobei die Bearbeitung umfasst, dass ein örtlicher Mittelwertfilter, ein Interpolationsfilter und/oder eine statistische Nachbearbeitung auf die Positionsinformationen angewandt wird. Bevorzugt wird eine Mehrzahl von Messungen des Distanzsensors miteinander verarbeitet und/oder verrechnet, um die Positionsinformationen in einem Kartenabschnitt zu erhalten. Die Bearbeitung ist insbesondere eine Nachbearbeitung nach dem Einlernmodus oder auch schon während des Einlernmodus, wobei die Bearbeitung insbesondere vor dem regulären Betrieb des beweglichen Maschinenteils erfolgt. Beispielsweise kann durch einen örtlichen Mittelwertfilter oder einen Interpolationsfilter eine Glättung der Positionsinformationen erreicht werden. Der Einfluss von Messfehlern auf die Positionsinformationen wird somit erheblich reduziert. Durch die Reduktion des Einflusses von Messfehlern wird zudem die Erkennung von möglichen Gefahrensituationen deutlich robuster, da Messfehler nicht mehr so starke Auswirkungen besitzen. Die Bearbeitung kann jeweils pro Kartenabschnitt der Referenzkarte oder auch unabhängig von den Kartenabschnitten erfolgen. Die Bearbeitung kann auch umfassen, dass ein umhüllendes Polygon und/oder ein umhüllender Polyeder der Umgebung berechnet und als Positionsinformationen in der Referenzkarte gespeichert wird.

Gemäß einer weiteren Ausführungsform wird beim Vergleich der Position des Messpunkts mit den Positionsinformationen zunächst die Positionsinformation in dem zum Messpunkt zugehörigen Kartenabschnitt herangezogen. Falls in dem zugehörigen Kartenabschnitt keine Positionsinformation vorliegt, wird bevorzugt die Positionsinformation aus zumindest einem benachbarten Kartenabschnitt herangezogen. Der zugehörige Kartenabschnitt ist derjenige Kartenabschnitt, in dem der Messpunkt liegt.

Wird festgestellt, dass in dem zugehörigen Kartenabschnitt keine Positionsinformationen gespeichert sind, so wird überprüft, ob in den benachbarten Kartenabschnitten Positionsinformationen hinterlegt sind. Der benachbarte Kartenabschnitt ist benachbart zu dem zugehörigen Kartenabschnitt. Es kann mit demjenigen benachbarten Kartenabschnitt begonnen werden, der der Position des Messpunkts am nächsten liegt. Anschließend können weitere benachbarte Kartenabschnitte herangezogen werden, die beispielsweise in aufsteigender Reihenfolge nach dem Abstand zum Messpunkt sortiert sind.

Gemäß einer weiteren Ausführungsform entspricht die Größe zumindest eines Kartenabschnitts der Größe des Toleranzbereichs. Gemäß einer weiteren Ausführungsform fällt zumindest ein Kartenabschnitt mit dem Toleranzbereich zusammen. Bevorzugt kann auch ein Großteil oder alle Kartenabschnitte eine Größe aufweisen, welche der Größe des jeweiligen Toleranzbereichs entspricht und mit dem jeweiligen Toleranzbereich zusammenfallen. Dies bedeutet, die Begrenzung des Kartenabschnitts fällt mit der Begrenzung des Toleranzbereichs im jeweiligen Kartenabschnitt zusammen. Dies birgt den Vorteil, dass im Betrieb nur überprüft werden muss, ob in einem Kartenabschnitt (z.B. dem Kartenabschnitt in dem der Messpunkt liegt) überhaupt Positionsinformationen gespeichert sind. Ist dies der Fall, dann liegt die Position des Messpunkts automatisch innerhalb des Toleranzbereichs. Auf diese Weise kann der Rechenaufwand zur Überprüfung, ob ein Messpunkt im Toleranzbereich liegt oder nicht, deutlich reduziert werden, da lediglich eine Überprüfung stattfinden muss, ob Werte in einem Kartenabschnitt hinterlegt sind oder nicht. Die Reaktionszeit auf einen möglichen gefahrbringenden Eingriff kann somit reduziert werden.

Gemäß einer weiteren Ausführungsform ist in zumindest einem Kartenabschnitt, bevorzugt bezüglich der Positionsinformationen, lediglich gespeichert, ob Positionsinformationen vorliegen oder nicht. Dies kann wiederum auch für einen Großteil oder alle Kartenabschnitte gelten. Die Positionsinformationen können somit z.B. binär (1/0 oder Ja/Nein) abgespeichert sein und nur diese Information umfassen. Folglich kann darauf verzichtet werden, konkrete Messwerte oder Positionswerte als Positionsinformationen zu speichern. Dies ist insbesondere dann möglich, wenn der Toleranzbereich mit der Begrenzung des Kartenabschnitts zusammenfällt und/oder die Größe des jeweiligen Kartenabschnitts der Größe des Toleranzbereichs entspricht. Ein solches Vorgehen kann auch den Einlernvorgang vereinfachen, da jeweils nur ein Binärwert gespeichert werden muss. Auf diese Weise kann auch der benötigte Speicherplatz verringert werden, wodurch auch das Auslesen der Positionsinformationen im Betrieb schneller und einfacher erfolgen kann. Wird die Positionsinformation lediglich binär gespeichert, kann die Referenzkarte bzw. können die Kartenabschnitte auch als "Occupancy-Grid-Struktur" bezeichnet werden.

Gemäß einer weiteren Ausführungsform ist der Toleranzbereich in verschiedenen Kartenabschnitten unterschiedlich groß. Bevorzugt kann der Toleranzbereich im Bereich von Höhenkanten größer gewählt sein. Durch unterschiedliche Größen des Toleranzbereichs kann auf unterschiedliche Anforderungen in verschiedenen Bereichen der Umgebung Rücksicht genommen werden. Beispielsweise im Bereich der angesprochenen Höhenkanten kann ein Distanzwert, welcher von den Distanzen gemessen wird, leicht zwischen zwei unterschiedlichen Werten springen. Um im Bereich von Höhenkanten somit ein fälschliches Erkennen von Gefahrensituationen zu verhindern (d.h., dass fälschlicherweise erkannt wird, dass das Umgebungsobjekt außerhalb des Toleranzbereichs liegt), wird der Toleranzbereich im Bereich von Höhenkanten größer gewählt, beispielsweise um 50% oder 100% größer als in Bereichen ohne Höhenkanten.

Gemäß einer weiteren Ausführungsform sind die Positionsinformationen in der Referenzkarte in einer Baumstruktur, insbesondere als Quadtree, gespeichert. Durch die Baumstruktur und/oder den Quadtree können Bereiche ohne Positionsinformationen mit geringem Speicherbedarf abgebildet werden, wobei trotzdem eine hohe Auflösung und/oder örtliche Genauigkeit im Bereich mit Positionsinformationen erreicht werden kann. Auf diese Weise können Kartenabschnitte unterschiedlich groß ausgebildet sein, um beispielsweise auch unterschiedliche Toleranzbereiche durch unterschiedlich große Kartenabschnitte abzubilden.

Allgemein können die Kartenabschnitte jeweils dieselbe Größe oder auch unterschiedliche Größen aufweisen.

Erfindungsgemäß werden mehrere verschiedene Referenzkarten vorgehalten, wobei die verschiedenen Referenzkarten für verschiedene Arbeitsabläufe und/oder Arbeitspositionen des beweglichen Maschinenteils verwendet werden. Beispielsweise können die verschiedenen Referenzkarten für verschiedene zeitlich nacheinander folgende Arbeitsabläufe des beweglichen Maschinenteils verwendet werden. Dabei kann jeweils die aktuelle Referenzkarte in einen Speicher geladen werden, auf welchen die Steuereinrichtung dann zugreifen kann. Durch die Verwendung verschiedener Referenzkarten kann der Speicherbedarf für eine einzelne Referenzkarte geringgehalten werden, was wiederum eine schnellere Auswertung gestattet.

Weiterhin ist es möglich, Referenzkarten auf ähnliche oder baugleiche andere Maschinen zu übertragen, so dass eine für ein bewegliches Maschinenteil erstellte Referenzkarte auch für andere bewegliche Maschinenteile Verwendung finden kann.

Auch können vorhandene Referenzkarten nur zum Teil neu eingelernt werden, um z.B. auf bauliche Veränderungen in einem Bereich der Umgebung zu reagieren. Das Neu-Einlernen kann z.B. auch durch eine Simulation erfolgen.

Insbesondere kann die Referenzkarte auch, zumindest zum Teil, nach dem Einlernen oder nach einer vorbestimmten Zeit des regulären Betriebs, verifiziert werden. Bei der Verifikation kann überprüft werden, ob die Umgebung bei der Distanzmessung noch innerhalb des Toleranzbereichs liegt. Liegt die Umgebung außerhalb des Toleranzbereichs kann ein Warnsignal ausgegeben und/oder die Referenzkarte aktualisiert werden.

Gemäß einer weiteren Ausführungsform werden mit dem Distanzsensor wiederholt und/oder regelmäßig Distanzmessungen durchgeführt, insbesondere bei einer Bewegung des beweglichen Maschinenteils. Im Betrieb des beweglichen Maschinenteils kann somit eine Live-Ermittlung der Distanz des beweglichen Maschinenteils zu dem Messpunkt stattfinden. Bevorzugt erfolgt für eine Distanzmessung jeweils eine Ermittlung, ob die Position des Messpunkts im Toleranzbereich liegt. Es versteht sich, dass auch mehrere Distanzmessungen zusammengefasst werden können, beispielsweise durch Mittelwertbildung, um die Position des Messpunkts zu bestimmen.

Gemäß einer weiteren Ausführungsform wird mittels eines ortsfest angebrachten 3D-Sensors die Umgebung des beweglichen Maschinenteils überwacht. Bevorzugt wird bei Erkennen, dass eine Änderung in der Umgebung aufgetreten ist, die Referenzkarte entsprechend angepasst. Dies bedeutet, der 3D-Sensor kann stationär und z.B. beabstandet zu dem beweglichen Maschinenteil, angebracht sein und die Umgebung des Maschinenteils auf Änderungen hin überwachen. Die Änderungen können beispielsweise mittels einer künstlichen Intelligenz oder durch einfachen Wertevergleich mit der Referenzkarte erkannt werden. Wird nun eine Änderung in der Umgebung erkannt, beispielsweise durch ein Verschieben eines in der Umgebung vorhandenen Objekts, kann die Referenzkarte entsprechend angepasst werden, indem bisherige Positionsinformationen in der Referenzkarte aktualisiert werden.

Weiterer Gegenstand der Erfindung ist eine Vorrichtung gemäß Anspruch 12.

Bei dem beweglichen Maschinenteil kann es sich beispielsweise um einen Roboterarm handeln, insbesondere um einen Scara- oder 6-Achsen-Roboterarm.

Gemäß einer Ausführungsform der Vorrichtung weist der Distanzsensor mehrere optoelektronische Messeinrichtungen auf, welche an unterschiedlichen Positionen angeordnet sind und/oder in unterschiedliche Richtungen ausgerichtet sind. Der Distanzsensor kann beispielsweise mehrere SPAD-Sensoren aufweisen. Die Messeinrichtungen können beispielsweise um ein Werkzeug des beweglichen Maschinenteils herum angeordnet werden, um so einen Sicherheitsbereich für das Werkzeug zu bilden. Beispielsweise können die Messeinrichtungen ringförmig um das Werkzeug herum angeordnet sein. Bei einer ringförmigen Anordnung können die Messeinrichtungen parallel zueinander ausgerichtet sein (d.h., die optischen Achsen der Messeinrichtungen verläuft jeweils parallel zu den anderen Messstrahlen). Alternativ können die optischen Achsen bzw. Messrichtungen jeweils tangential zur Ringform einen spitzen Winkel aufweisen.

Beim Einsatz mehrerer Messeinrichtungen in dem Distanzsensor kann für jede Messeinrichtung eine eigene zweidimensionale Referenzkarte hinterlegt sein. Für eine Distanzmessung eines Messpunkts kann jeweils für jede Messeinrichtung einzeln geprüft werden, ob das Umgebungsobjekt außerhalb des Toleranzbereichs liegt.

Gemäß einer Ausführungsform ist der Distanzsensor ein sicherer Distanzsensor, also für eine sicherheitstechnische Anwendung ausgelegt.

Im Übrigen gelten für die erfindungsgemäße Vorrichtung die zum erfindungsgemäßen Verfahren getroffenen Aussagen entsprechend. Dies gilt insbesondere hinsichtlich Vorteilen und Ausführungsformen.

Nachfolgend wird die Erfindung rein beispielhaft unter Bezugnahme auf die Zeichnungen beschrieben. Es zeigen:
- Fig. 1: ein bewegliches Maschinenteil mit einem Distanzsensor und einer Steuereinrichtung;
- Fig. 2: eine Detailansicht eines Werkzeugs des beweglichen Maschinenteils und der Anordnung des Distanzsensors;
- Fig. 3: das bewegliche Maschinenteil in einer Arbeitsumgebung;
- Fig. 4: schematisch eine Referenzkarte;
- Fig. 5: eine weitere schematische Darstellung der Referenzkarte; und
- Fig. 6: Toleranzbereiche an Höhenkanten.

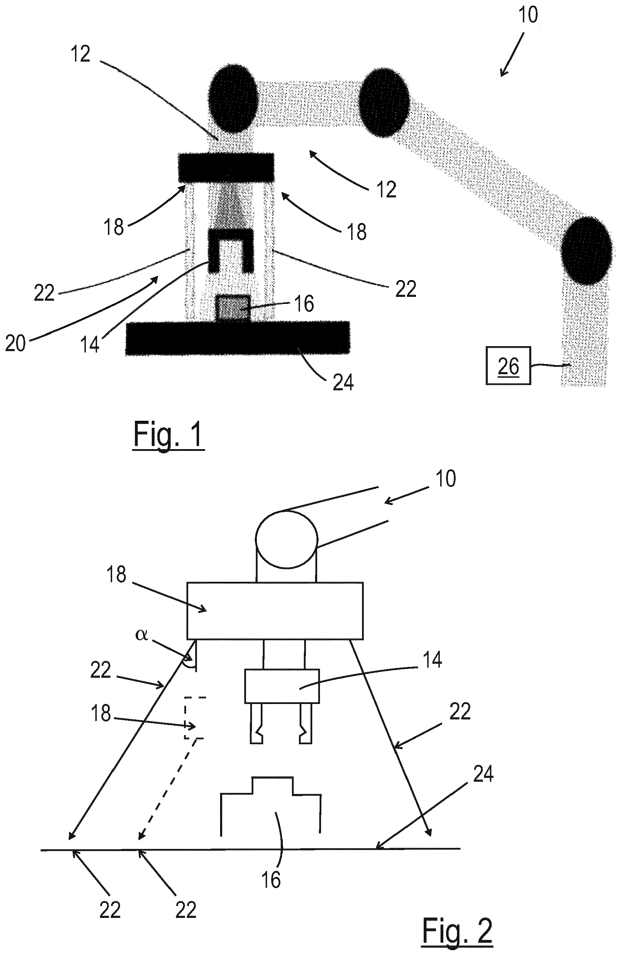

Fig. 1 zeigt ein bewegliches Maschinenteil in Form eines Roboters 10. Der Roboter 10 verfügt über mehrere Gelenke, wobei am Ende des so geformten Gelenkarms 12 ein Werkzeug 14 angebracht ist, das zur Bearbeitung eines Werkstücks 16 dient. Bei dem Werkzeug 14 kann es sich beispielsweise um einen Bohrer, Fräser oder Greifer handeln.

Ebenfalls am Ende des Gelenkarms 12 ist ein Distanzsensor 18 angebracht, welcher zur Überwachung eines Gefahrenbereichs 20 dient. Der Distanzsensor 18 umfasst mehrere optoelektronische Messeinrichtungen (nicht explizit dargestellt), die modular um das Werkzeug 14 herum angeordnet sind und einen optischen Schutzvorhang 22 bilden. Die Messeinrichtungen des Distanzsensors 18 können jeweils Licht entlang des Schutzvorhangs 22 in die Umgebung ausstrahlen und eine Lichtlaufzeit von rückgestrahltem Licht messen.

Im Beispiel von Fig. 1 treffen die Lichtstrahlen des Schutzvorhangs 22 auf eine Unterlage 24 (d.h. ein Umgebungsobjekt) des Werkstücks 16 und werden von dort remittiert. Die so vom Distanzsensor 18 gemessene Distanz zwischen dem Distanzsensor 18 und damit zwischen dem Roboter 10 und der Unterlage 24 wird von einer Steuereinrichtung 26 ausgewertet.

In Fig. 2 ist im Unterschied zu Fig. 1 ein nach außen geneigter Schutzvorhang 22 dargestellt, durch welchen beispielsweise ein Eingreifen eines Menschen bei einem größeren Werkstück 16 erkannt werden könnte.

Der Schutzvorhang 22 ist dort unter einem Winkel α geneigt. In Fig. 2 ist zudem gestrichelt eine weitere Position des Roboters 10 gezeigt, in welcher der Distanzsensor 18 näher an der Unterlage 24 angeordnet ist. In dieser Position wird von dem Distanzsensor 18 eine kürzere Distanz zu der Unterlage 24 gemessen.

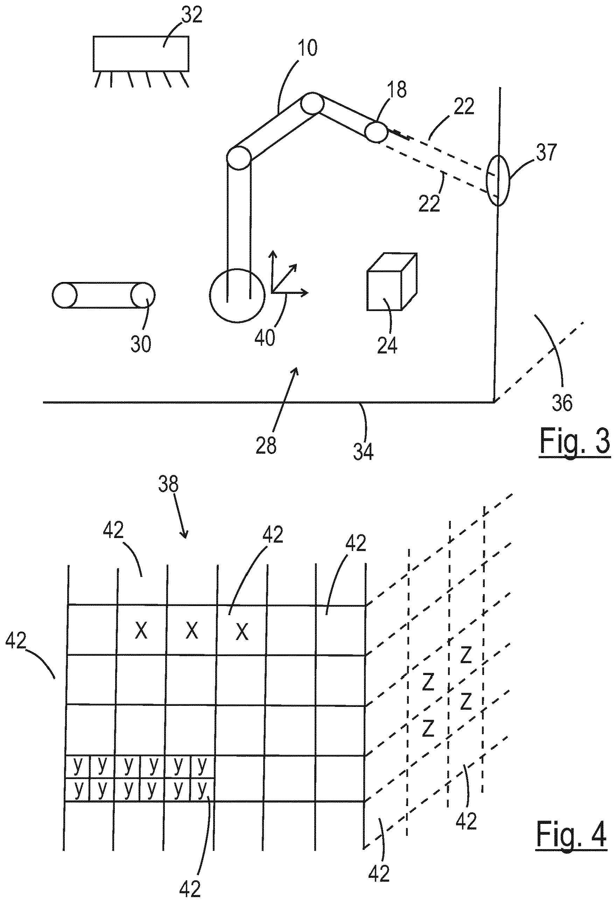

Fig. 3 zeigt den Roboter 10 in einer Umgebung 28. Die Umgebung 28 umfasst die Unterlage 24 des Werkstücks 16 sowie ein Förderband 30 und eine Beleuchtung 32. Die Umgebung 28 wird zudem durch einen Boden 34 und eine Wand 36 begrenzt. Bei der in Fig. 3 gezeigten Position des Roboters 10 wird gerade eine Distanzmessung eines Messpunkts 37 auf der Wand 36 durchgeführt.

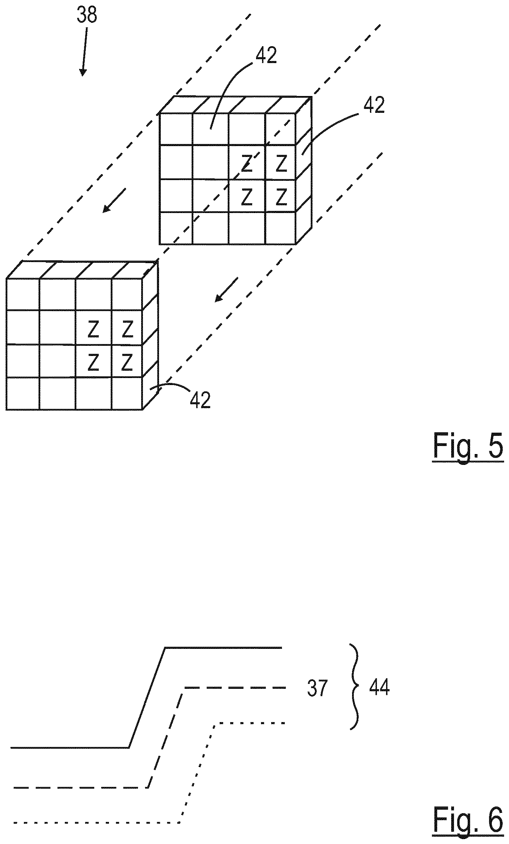

Vor dem regulären Betrieb des Roboters 10 wird der Roboter 10 in einen Einlernmodus geschaltet, wenn sich keine unerwünschten Hindernisse oder Menschen in der Umgebung 28 aufhalten. In dem Einlernmodus kann beispielsweise der Bewegungsvorgang vom Roboter 10 vollführt werden, der später im Betrieb regelmäßig wiederholt wird. Der Roboter 10 fährt also verschiedene Prozesspunkte an, wobei während des Anfahrens der Prozesspunkte und/oder an den Prozesspunkten jeweils die von dem Distanzsensor 18 gemessenen Distanzwerte von der Steuereinrichtung 26 in einer Referenzkarte 38 (siehe Fig. 4 und 5) gespeichert werden. In der Referenzkarte sind dementsprechend die Positionen der Unterlage 24, des Förderbands 30, der Beleuchtung 32, des Bodens 34 und der Wand 36 hinterlegt.

Die Referenzkarte 38 ist schematisch in Fig. 4 dargestellt. Die Referenzkarte 38 bezieht sich auf ein ortsfestes Koordinatensystem 40. Zum Speichern der Position beispielsweise der Unterlage 24 in der Referenzkarte 38 muss aus der Pose des Roboters 10 die Position des Messpunkts 37 in dem ortsfesten Koordinatensystem 40 durch Transformation bestimmt werden.

In Fig. 4 sind die Ergebnisse der Distanzmessung für Messpunkte 37 auf der Beleuchtung 32 als (transformierte) Positionsinformationen X in die Referenzkarte 38 eingetragen. Für die Unterlage 24 sind die Positionsinformationen Z in die Referenzkarte eingetragen. Schließlich sind auch Positionsinformationen Y für das Förderband 30 in der Referenzkarte 38 hinterlegt. Es ist zu erkennen, dass die Positionsinformationen X, Y, Z jeweils in Kartenabschnitten 42 gespeichert sind, wobei leere Kartenabschnitte 42 anzeigen, dass dort beim Einlernen kein Objekt in der Umgebung 28 festgestellt wurde.

Die Grenzen der Kartenabschnitte 42 stellen im hier dargestellten Beispiel gleichzeitig auch einen Toleranzbereich dar. Für das Förderband 30 ist der Toleranzbereich kleiner gewählt, so dass die Positionsinformationen Y für das Förderband 30 in kleineren Kartenabschnitten 42 gespeichert sind.

Die Positionsinformationen X, Y, Z können beispielsweise in einer dreidimensionalen Referenzkarte 38 mit dreidimensionalen Kartenabschnitten 42 (sogenannten Voxeln) gespeichert werden, wie dies in den Fig. 4 und 5 dargestellt ist. Alternativ sind auch zweidimensionale Referenzkarten 38 möglich.

Anstelle der Verwendung der Kartenabschnitte 42 zur Definition von Toleranzbereichen kann die Größe des jeweiligen Toleranzbereichs auch in den Positionsinformationen X, Y, Z oder dem jeweiligen Kartenabschnitt 42 hinterlegt sein. Auch dann ist es möglich, unterschiedlich große Toleranzbereiche 44 zu definieren. In diesem Zusammenhang zeigt Fig. 6 eine durch mehrere Messpunkte 37 gebildete Höhenkante, wobei im Bereich der Höhenkante der Toleranzbereich größer ausgebildet ist.

Im regulären Betrieb des Roboters 10 führt der Distanzsensor 18 ständig wiederholt Distanzmessungen durch. Für eine solche Distanzmessung wird jeweils eine Position des Messpunkts 37 bestimmt, wobei sich der Messpunkt 37 je nach Pose des Roboters 10 ständig ändert. Die Position des Messpunkts 37 wird mit den Positionsinformationen X, Y, Z aus der Referenzkarte 38 verglichen. Wird nun beispielsweise festgestellt, dass die Position des Messpunkts im regulären Betrieb innerhalb des Toleranzbereichs 44 bzw. innerhalb eines Kartenabschnitts 42 liegt, so kann davon ausgegangen werden, dass der Distanzsensor 18 "nur" z.B. die Wand 36 erfasst hat. Liegt die Position des Messpunkts aber außerhalb des Toleranzbereichs 44 bzw. außerhalb des Kartenabschnitts 42, so muss vermutet werden, dass sich z.B. ein Mensch unerlaubt dem Roboter 10 oder dem Werkzeug 14 genähert hat. Damit liegt ein Eindringen in den Gefahrenbereich 20 vor, woraufhin die Steuereinrichtung 26 den Roboter 10 in einen sicheren Zustand bringt und den Roboter 10 beispielsweise sofort stoppt.

Durch die Verwendung der Referenzkarte 38 und der Kartenabschnitte 42 ist ein schneller und robuster Vergleich der Position des Messpunkts mit vorher ermittelten Messwerten möglich, so dass schnell und robust auf mögliche Gefahrensituationen reagiert werden kann.

### Bezugszeichenliste

- 10: Roboter
- 12: Gelenkarm
- 14: Werkzeug
- 16: Werkstück
- 18: Distanzsensor
- 20: Gefahrenbereich
- 22: Schutzvorhang
- 24: Unterlage
- 26: Steuereinrichtung
- 28: Umgebung
- 30: Förderband
- 32: Beleuchtung
- 34: Boden
- 36: Wand
- 37: Messpunkt
- 38: Referenzkarte
- 40: Koordinatensystem
- 42: Kartenabschnitt
- 44: Toleranzbereich
- α: Winkel
- X, Y, Z: Positionsinformationen

## Patentansprüche

1. Verfahren zum sicheren Betrieb eines beweglichen Maschinenteils (10), insbesondere eines Roboterarms, bevorzugt im Rahmen einer Mensch-Roboter-Kollaboration, wobei
- eine Referenzkarte (38) mit einem oder mehreren Kartenabschnitten (42) bereitgestellt wird, wobei sich die Referenzkarte (38) auf ein ortsfestes Koordinatensystem (40) bezieht und in zumindest einem Kartenabschnitt (42) Positionsinformationen (X, Y, Z) der Umgebung (28) des beweglichen Maschinenteils (10) gespeichert sind, wobei mehrere verschiedene Referenzkarten (38) vorgehalten werden, wobei die verschiedenen Referenzkarten (38) für verschiedene Arbeitsabläufe und/oder Arbeitspositionen des beweglichen Maschinenteils (10) verwendet werden,
- mit einem am beweglichen Maschinenteil (10) angebrachten Distanzsensor (18) zumindest eine Distanzmessung für einen Messpunkt (37) eines Umgebungsobjekts (24, 30, 32, 34, 36) durchgeführt wird, wobei die Distanzmessung eine Distanz des beweglichen Maschinenteils (10) zu dem Messpunkt (37) ermittelt,
- anhand einer Position des beweglichen Maschinenteils (10) die Position des Messpunkts (37) in dem ortsfesten Koordinatensystem (40) ermittelt wird,
- basierend auf der Position des Messpunkts (37) der zum Messpunkt (37) zugehörige Kartenabschnitt (42) bestimmt wird, sofern mehrere Kartenabschnitte (42) vorhanden sind,
- ein Vergleich der Position des Messpunkts (37) mit den Positionsinformationen (X, Y, Z) vorgenommen wird, um zu ermitteln, ob das Umgebungsobjekt (24, 30, 32, 34, 36) außerhalb eines Toleranzbereichs (44) zu den Positionsinformationen (X, Y, Z) der Umgebung (28) liegt,
- das bewegliche Maschinenteil (10) in einen sicheren Zustand gebracht wird, wenn das Umgebungsobjekt (24, 30, 32, 34, 36) außerhalb des Toleranzbereichs (44) liegt.

2. Verfahren nach Anspruch 1,
wobei die Positionsinformationen (X, Y, Z) der Umgebung (28) in einem Einlernmodus ermittelt und in der Referenzkarte (38) gespeichert werden, wobei der Distanzsensor (18) im Einlernmodus die Positionsinformationen (X, Y, Z) der Umgebung (28) erfasst und die Positionsinformationen (X, Y, Z) in dem zugehörigen Kartenabschnitt (42) gespeichert werden und/oder wobei die Positionsinformationen (X, Y, Z) aus Planungs- und/oder Simulationsdaten generiert werden.

3. Verfahren nach Anspruch 2,
wobei der Distanzsensor (18) im Einlernmodus die Positionsinformationen (X, Y, Z) der Umgebung (28) durch Distanzmessungen ermittelt, wobei die Positionsinformationen (X, Y, Z) aus den Distanzmessungen durch Transformation in das ortsfeste Koordinatensystem (40) erzeugt werden, wobei die Positionsinformationen (X, Y, Z) in dem Einlernmodus bevorzugt als Punktwolke in der Referenzkarte (38) gespeichert werden.

4. Verfahren nach einem der vorstehenden Ansprüche,
wobei eine Bearbeitung der in der Referenzkarte (38) gespeicherten Positionsinformationen (X, Y, Z) erfolgt, wobei die Bearbeitung umfasst, dass
- ein örtlicher Mittelwertfilter,
- ein Interpolationsfilter und/oder
- eine statistische Nachbearbeitung
auf die Positionsinformationen (X, Y, Z) angewandt wird.

5. Verfahren nach einem der vorstehenden Ansprüche,
wobei beim Vergleich der Position des Messpunkts (37) mit den Positionsinformationen (X, Y, Z) zunächst die Positionsinformation in dem zum Messpunkt (37) zugehörigen Kartenabschnitt (42) herangezogen wird und falls in dem zugehörigen Kartenabschnitt (42) keine Positionsinformation vorliegt dann die Positionsinformationen (X, Y, Z) aus zumindest einem benachbarten Kartenabschnitt (42) herangezogen wird.

6. Verfahren nach einem der vorstehenden Ansprüche,
wobei die Größe zumindest eines Kartenabschnitts (42) der Größe des Toleranzbereichs (44) entspricht und zumindest ein Kartenabschnitt (42) mit dem Toleranzbereich (44) zusammenfällt.

7. Verfahren nach einem der vorstehenden Ansprüche,
wobei in zumindest einem Kartenabschnitt (42) bezüglich der Positionsinformationen (X, Y, Z) lediglich gespeichert ist, ob Positionsinformationen (X, Y, Z) vorliegen oder nicht.

8. Verfahren nach einem der vorstehenden Ansprüche,
wobei der Toleranzbereich (44) in verschiedenen Kartenabschnitten (42) unterschiedlich groß ist und bevorzugt im Bereich von Höhenkanten größer gewählt ist.

9. Verfahren nach einem der vorstehenden Ansprüche,
wobei die Positionsinformationen (X, Y, Z) in der Referenzkarte (38) in einer Baumstruktur, insbesondere als Quadtree, gespeichert sind.

10. Verfahren nach einem der vorstehenden Ansprüche,
wobei mit dem Distanzsensor (18) wiederholt und/oder regelmäßig Distanzmessungen durchgeführt werden, insbesondere bei einer Bewegung des beweglichen Maschinenteils (10).

11. Verfahren nach einem der vorstehenden Ansprüche,
wobei mittels eines ortsfest angebrachten 3D-Sensors die Umgebung (28) des beweglichen Maschinenteils (10) überwacht wird und bei Erkennen, dass eine Änderung in der Umgebung (28) aufgetreten ist, die Referenzkarte (38) entsprechend angepasst wird.

12. Vorrichtung mit einem beweglichen Maschinenteil (10), insbesondere einem Roboterarm, einem optoelektronischen Distanzsensor (18), welcher an dem beweglichen Maschinenteil (10) angeordnet ist, und einer Steuereinrichtung, wobei
- die Steuereinrichtung eine Referenzkarte (38) mit einem oder mehreren Kartenabschnitten (42) speichert, wobei sich die Referenzkarte (38) auf ein ortsfestes Koordinatensystem (40) bezieht und in zumindest einem Kartenabschnitt (42) Positionsinformationen (X, Y, Z) der Umgebung (28) des beweglichen Maschinenteils (10) gespeichert sind, wobei die Steuereinrichtung ausgebildet ist, mehrere verschiedene Referenzkarten (38) vorzuhalten, wobei die Steuereinrichtung ausgebildet ist, die verschiedenen Referenzkarten (38) für verschiedene Arbeitsabläufe und/oder Arbeitspositionen des beweglichen Maschinenteils (10) zu verwenden,
- der Distanzsensor (18) ausgebildet ist, zumindest eine Distanzmessung für einen Messpunkt (37) eines Umgebungsobjekts (24, 30, 32, 34, 36) durchzuführen, wobei die Distanzmessung eine Distanz des beweglichen Maschinenteils (10) zu dem Messpunkt (37) ermittelt,
- die Steuereinrichtung ausgebildet ist, anhand einer Position des beweglichen Maschinenteils (10) die Position des Messpunkts (37) in dem ortsfesten Koordinatensystem (40) zu ermitteln,
- die Steuereinrichtung ausgebildet ist, basierend auf der Position des Messpunkts (37) den zum Messpunkt (37) zugehörigen Kartenabschnitt (42) zu bestimmen, sofern mehrere Kartenabschnitte (42) vorhanden sind,
- die Steuereinrichtung ausgebildet ist, einen Vergleich der Position des Messpunkts (37) mit den Positionsinformationen (X, Y, Z) vorzunehmen, um zu ermitteln, ob das Umgebungsobjekt (24, 30, 32, 34, 36) außerhalb eines Toleranzbereichs (44) zu den Positionsinformationen (X, Y, Z) der Umgebung (28) liegt,
- die Steuereinrichtung ausgebildet ist, das bewegliche Maschinenteil (10) in einen sicheren Zustand zu bringen, wenn das Umgebungsobjekt (24, 30, 32, 34, 36) außerhalb des Toleranzbereichs (44) liegt.

13. Vorrichtung nach Anspruch 12,
wobei der Distanzsensor (18) mehrere Messeinrichtungen aufweist, welche an unterschiedlichen Positionen angeordnet sind und/oder in unterschiedliche Richtungen ausgerichtet sind.

14. Vorrichtung nach Anspruch 12 oder 13,
wobei der Distanzsensor (18) ein sicherer Distanzsensor (18) ist.

## Claims

1. A method for the safe operation of a movable machine part (10), in particular a robot arm, preferably as part of a human-robot collaboration, wherein
- a reference map (38) comprising one or more map sections (42) is provided, wherein the reference map (38) relates to a stationary coordinate system (40) and position information (X, Y, Z) of the environment (28) of the movable machine part (10) is stored in at least one map section (42),
wherein a plurality of different reference maps (38) are kept available,
wherein the different reference maps (38) are used for different work sequences and/or work positions of the movable machine part (10),
- at least one distance measurement for a measurement point (37) of an environmental object (24, 30, 32, 34, 36) is carried out with a distance sensor (18) attached to the movable machine part (10), wherein the distance measurement determines a distance of the movable machine part (10) from the measurement point (37),
- the position of the measurement point (37) in the stationary coordinate system (40) is determined based on a position of the movable machine part (10),
- the map section (42) associated with the measurement point (37) is determined based on the position of the measurement point (37) if a plurality of map sections (42) are present,
- a comparison of the position of the measurement point (37) with the position information (X, Y, Z) is made to determine whether the environmental object (24, 30, 32, 34, 36) lies outside a tolerance range (44) with respect to the position information (X, Y, Z) of the environment (28),
- the movable machine part (10) is brought into a safe state when the environmental object (24, 30, 32, 34, 36) lies outside the tolerance range (44).

2. A method in accordance with claim 1,
wherein the position information (X, Y, Z) of the environment (28) is determined in a teach-in mode and is stored in the reference map (38), wherein the distance sensor (18) acquires the position information (X, Y, Z) of the environment (28) in the teach-in mode and the position information (X, Y, Z) is stored in the associated map section (42), and/or wherein the position information (X, Y, Z) is generated from planning and/or simulation data.

3. A method in accordance with claim 2,
wherein the distance sensor (18) determines the position information (X, Y, Z) of the environment (28) by distance measurements in the teach-in mode, wherein the position information (X, Y, Z) is generated from the distance measurements by a transformation into the stationary coordinate system (40), wherein the position information (X, Y, Z) is preferably stored as a point cloud in the reference map (38) in the teach-in mode.

4. A method in accordance with any one of the preceding claims,
wherein a processing of the position information (X, Y, Z) stored in the reference map (38) takes place, wherein the processing comprises
- a local average filter,
- an interpolation filter and/or
- a statistical post-processing
being applied to the position information (X, Y, Z).

5. A method in accordance with any one of the preceding claims, wherein, when comparing the position of the measurement point (37) with the position information (X, Y, Z), the position information in the map section (42) associated with the measurement point (37) is first used and, if no position information is available in the associated map section (42), the position information (X, Y, Z) from at least one adjacent map section (42) is then used.

6. A method in accordance with any one of the preceding claims,
wherein the size of at least one map section (42) corresponds to the size of the tolerance range (44) and at least one map section (42) coincides with the tolerance range (44).

7. A method in accordance with any one of the preceding claims,
wherein, in at least one map section (42), with respect to the position information (X, Y, Z), it is only stored whether position information (X, Y, Z) is present or not.

8. A method in accordance with any one of the preceding claims,
wherein the tolerance range (44) is of different sizes in different map sections (42) and is preferably selected larger in the region of height edges.

9. A method in accordance with any one of the preceding claims,
wherein the position information (X, Y, Z) is stored in the reference map (38) in a tree structure, in particular as a quadtree.

10. A method in accordance with any one of the preceding claims,
wherein distance measurements are repeatedly and/or regularly carried out with the distance sensor (18), in particular on a movement of the movable machine part (10).

11. A method in accordance with any one of the preceding claims,
wherein the environment (28) of the movable machine part (10) is monitored by means of a 3D sensor attached in a fixed position and the reference map (38) is adapted accordingly when it is recognized that a change has occurred in the environment (28).

12. An apparatus comprising a movable machine part (10), in particular a robot arm, an optoelectronic distance sensor (18) which is arranged at the movable machine part (10), and a control device, wherein
- the control device stores a reference map (38) comprising one or more map sections (42), wherein the reference map (38) relates to a stationary coordinate system (40) and position information (X, Y, Z) of the environment (28) of the movable machine part (10) is stored in at least one map section (42), wherein the control device is configured to keep a plurality of different reference maps (38) available, wherein the control device is configured to use the different reference maps (38) for different work sequences and/or work positions of the movable machine part (10),
- the distance sensor (18) is configured to carry out at least one distance measurement for a measurement point (37) of an environmental object (24, 30, 32, 34, 36), wherein the distance measurement determines a distance of the movable machine part (10) from the measurement point (37),
- the control device is configured to determine the position of the measurement point (37) in the stationary coordinate system (40) based on a position of the movable machine part (10),
- the control device is configured to determine the map section (42) associated with the measurement point (37) based on the position of the measurement point (37) if a plurality of map sections (42) are present,
- the control device is configured to perform a comparison of the position of the measurement point (37) with the position information (X, Y, Z) to determine whether the environmental object (24, 30, 32, 34, 36) lies outside a tolerance range (44) with respect to the position information (X, Y, Z) of the environment (28),
- the control device is configured to bring the movable machine part (10) into a safe state when the environmental object (24, 30, 32, 34, 36) lies outside the tolerance range (44).

13. An apparatus in accordance with claim 12,
wherein the distance sensor (18) has a plurality of measurement devices which are arranged at different positions and/or are oriented in different directions.

14. An apparatus in accordance with claim 12 or claim 13,
wherein the distance sensor (18) is a safe distance sensor (18).

## Revendications

1. Procédé de fonctionnement sécurisé d'une partie de machine (10) mobile, en particulier d'un bras de robot, de préférence dans le cadre d'une collaboration homme-robot, dans lequel
- une carte de référence (38) ayant une ou plusieurs sections de carte (42) est mise à disposition, la carte de référence (38) se référant à un système de coordonnées fixe (40), et des informations de position (X, Y, Z) de l'environnement (28) de la partie de machine (10) mobile étant mémorisées dans au moins une section de carte (42), plusieurs cartes de référence (38) différentes étant tenues à disposition, les différentes cartes de référence (38) étant utilisées pour différents processus de travail et/ou différentes positions de travail de la partie de machine (10) mobile,
- au moins une mesure de distance pour un point de mesure (37) d'un objet environnant (24, 30, 32, 34, 36) est effectuée au moyen d'un capteur de distance (18) monté sur la partie de machine (10) mobile, la mesure de distance déterminant une distance de la partie de machine mobile (10) par rapport au point de mesure (37),
- la position du point de mesure (37) dans le système de coordonnées fixe (40) est déterminée à l'aide d'une position de la partie de machine (10) mobile,
- dans la mesure où il existe plusieurs sections de carte (42), c'est la section de carte (42) associée au point de mesure (37) qui est définie sur la base de la position du point de mesure (37),
- une comparaison de la position du point de mesure (37) avec les informations de position (X, Y, Z) est effectuée afin de déterminer si l'objet environnant (24, 30, 32, 34, 36) se trouve en dehors d'une plage de tolérance (44) par rapport aux informations de position (X, Y, Z) de l'environnement (28),
- la partie de machine (10) mobile est mise dans un état sécurisé lorsque l'objet environnant (24, 30, 32, 34, 36) se trouve en dehors de la plage de tolérance (44).

2. Procédé selon la revendication 1,
dans lequel les informations de position (X, Y, Z) de l'environnement (28) sont déterminées dans un mode d'apprentissage et sont mémorisées dans la carte de référence (38),
le capteur de distance (18) saisit, en mode d'apprentissage, les informations de position (X, Y, Z) de l'environnement (28), et les informations de position (X, Y, Z) sont mémorisées dans la section de carte (42) associée, et/ou
les informations de position (X, Y, Z) sont générées à partir de données de planification et/ou de simulation.

3. Procédé selon la revendication 2,
dans lequel le capteur de distance (18) détermine, en mode d'apprentissage, les informations de position (X, Y, Z) de l'environnement (28) par des mesures de distance,
les informations de position (X, Y, Z) sont générées à partir des mesures de distance par transformation dans le système de coordonnées fixe (40), les informations de position (X, Y, Z) sont mémorisées, en mode d'apprentissage, de préférence sous forme de nuage de points dans la carte de référence (38).

4. Procédé selon l'une des revendications précédentes,
dans lequel s'effectue un traitement des informations de position (X, Y, Z) mémorisées dans la carte de référence (38), le traitement comprenant l'application aux informations de position (X, Y, Z)
- d'un filtre local de valeur moyenne,
- d'un filtre d'interpolation et/ou
- d'un post-traitement statistique.

5. Procédé selon l'une des revendications précédentes,
dans lequel, lors de la comparaison de la position du point de mesure (37) avec les informations de position (X, Y, Z), on a recours tout d'abord aux informations de position dans la section de carte (42) associée au point de mesure (37) et, si aucune information de position n'est disponible dans la section de carte (42) associée, on a alors recours aux informations de position (X, Y, Z) d'au moins une section de carte (42) voisine.

6. Procédé selon l'une des revendications précédentes,
dans lequel la taille d'au moins une section de carte (42) correspond à la taille de la plage de tolérance (44), et au moins une section de carte (42) coïncide avec la plage de tolérance (44).

7. Procédé selon l'une des revendications précédentes,
dans lequel, en ce qui concerne les informations de position (X, Y, Z), seule la présence ou l'absence d'informations de position (X, Y, Z) est mémorisée dans au moins une section de carte (42).

8. Procédé selon l'une des revendications précédentes,
dans lequel la plage de tolérance (44) est de taille différente dans différentes sections de carte (42) et est de préférence choisie plus grande dans la zone des bords en élévation.

9. Procédé selon l'une des revendications précédentes,
dans lequel les informations de position (X, Y, Z) sont mémorisées dans une structure arborescente, en particulier sous forme de quadtree dans la carte de référence (38).

10. Procédé selon l'une des revendications précédentes,
dans lequel des mesures de distance sont effectuées de manière répétée et/ou régulière au moyen du capteur de distance (18), en particulier lors d'un mouvement de la partie de machine (10) mobile.

11. Procédé selon l'une des revendications précédentes,
dans lequel l'environnement (28) de la partie de machine (10) mobile est surveillé au moyen d'un capteur 3D monté de manière fixe et, lorsqu'il est détecté qu'un changement est intervenu dans l'environnement (28), la carte de référence (38) est adaptée en conséquence.

12. Dispositif comprenant une partie de machine (10) mobile, en particulier un bras de robot, un capteur de distance optoélectronique (18) disposé sur la partie de machine (10) mobile, et un organe de commande, dans lequel
- l'organe de commande mémorise une carte de référence (38) ayant une ou plusieurs sections de carte (42), la carte de référence (38) se référant à un système de coordonnées fixe (40), et des informations de position (X, Y, Z) de l'environnement (28) de la partie de machine (10) mobile étant mémorisées dans au moins une section de carte (42), l'organe de commande étant réalisé pour tenir à disposition plusieurs cartes de référence (38) différentes, l'organe de commande étant réalisé pour utiliser les différentes cartes de référence (38) pour différents processus de travail et/ou différentes positions de travail de la partie de machine (10) mobile,
- le capteur de distance (18) est réalisé pour effectuer au moins une mesure de distance pour un point de mesure (37) d'un objet environnant (24, 30, 32, 34, 36), la mesure de distance déterminant une distance de la partie de machine mobile (10) par rapport au point de mesure (37),
- l'organe de commande est réalisé pour déterminer la position du point de mesure (37) dans le système de coordonnées fixe (40) à l'aide d'une position de la partie de machine mobile (10),
- l'organe de commande est réalisé pour définir, en se basant sur la position du point de mesure (37), la section de carte (42) associée au point de mesure (37), dans la mesure où il existe plusieurs sections de carte (42),
- l'organe de commande est réalisé pour effectuer une comparaison de la position du point de mesure (37) avec les informations de position (X, Y, Z), afin de déterminer si l'objet environnant (24, 30, 32, 34, 36) se trouve en dehors d'une plage de tolérance (44) par rapport aux informations de position (X, Y, Z) de l'environnement (28),
- l'organe de commande est réaliser pour mettre la partie de machine (10) mobile dans un état sécurisé lorsque l'objet environnant (24, 30, 32, 34, 36) se trouve en dehors de la plage de tolérance (44).

13. Dispositif selon la revendication 12,
dans lequel le capteur de distance (18) comprend plusieurs organes de mesure qui sont disposés à différentes positions et/ou orientés dans différentes directions.

14. Dispositif selon la revendication 12 ou 13,
dans lequel le capteur de distance (18) est un capteur de distance sécurisé (18).
